# FASCICULE DE BREVET EUROPEEN

(11) **EP 3 639 531 B1**
(45) Date de publication et mention de la délivrance du brevet: **10.11.2021**
(21) Numéro de dépôt: 18729703.1
(22) Date de dépôt: 14.06.2018
(51) Int. Cl.: H04W 4/02, H04L 29/12

(54) **GÉOLOCALISATION WIFI DE BIENS OU DE PERSONNES**
WI-FI-GEOLOKALISIERUNG VON PRODUKTEN ODER PERSONEN
WI-FI GEOLOCATION OF PRODUCTS OR OF INDIVIDUALS

(30) Priorité: 14.06.2017 FR 1755371
(43) Date de publication de la demande: 22.04.2020
(73) Titulaire: Connected Cycle, 75016 Paris (FR)
(72) Inventeur: KRAVANJA, Christian, 75015 Paris (FR); DEBBASCH, Jean-Marie, 75015 Paris (FR)
(74) Mandataire: Regimbeau
(86) Numéro de dépôt international: PCT/EP2018/065884
(87) Numéro de publication internationale: WO 2018/229227

(56) Documents cités:
- EP-A1- 2 443 562
- US-A1- 2014 274 043
- US-A1- 2015 181 511
- US-A1- 2015 223 016

## Description

La présente invention est relative à la géolocalisation de biens ou de personnes.

### DOMAINE TECHNIQUE GÉNÉRAL ET ART ANTÉRIEUR

Les traceurs permettant de géo-localiser des biens ou des personnes sont généralement composés de deux parties fonctionnelles :
- un module « GPS » qui permet au dispositif de calculer sa position (exprimée en coordonnées de latitude et de longitude - coordonnées GPS) ;
- un module de communication (modem « WAN ») qui permet au traceur de transmettre sa position à travers un réseau sans-fil opéré (GSM, 3G, 4G, réseaux d'opérateurs IoT, etc....).

Ils comportent en outre habituellement un troisième élément actif : un microcontrôleur qui gère ces deux modules et le cas échéant d'autres fonctionnalités.

Cette implémentation présente plusieurs inconvénients.

En particulier, elle est onéreuse : les modules GPS sont généralement d'un coût conséquent ; en outre, le coût global du traceur est d'autant plus important que celui-ci doit comporter trois éléments actifs (le module GPS, le module de communication et le microcontrôleur) et deux antennes.

Egalement l'utilisation d'un réseau « opéré » pour transmettre les informations implique le versement d'un abonnement à l'opérateur pendant toute la durée de vie du traceur.

Par ailleurs une telle implémentation de traceur est encombrante : ceci du fait de sa structure à trois éléments actifs et deux antennes et de la taille du module GPS et de son antenne associée.

En outre, les trois éléments actifs rendent sa consommation en énergie importante de sorte que les traceurs GPS sont souvent d'une faible autonomie.

Egalement encore, une telle implémentation de traceur a l'inconvénient de ne fonctionner qu'en extérieur. L'antenne du GPS doit en effet être dirigée vers le ciel, sans que sa fenêtre de réception ne soit obstruée.

Le document US 2015/0181511 A1 décrit un système incluant un module de localisation GNSS.

On connait par ailleurs déjà, notamment pour les systèmes de géolocalisation utilisés sur les téléphones portables, des techniques géolocalisation s'appuyant sur la détection des points d'accès WiFi visibles par un téléphone portable et le cas échéant sur le niveau de puissance que ledit téléphone détecte pour lesdits point d'accès.

Les informations sur les points d'accès visibles par ledit téléphone portable et le cas échéant sur les niveaux de puissance relevés pour ceux-ci sont collectées par une application logicielle dudit téléphone, qui interroge - via une connexion internet établie à partir dudit du téléphone - une base de données à distance pour que celle-ci lui donne en retour des coordonnées de géolocalisation.

Une telle solution - qui est parfaitement adaptée à la localisation de téléphones portables ou analogues (tablettes, par exemple) - reste onéreuse et est difficilement transposable à faible coût aux traceurs de localisation dédiés du fait qu'elle nécessite des composants de communication cellulaire et un abonnement opérateur pour l'établissement d'une communication internet permettant un dialogue avec la base de données à distance.

Le document US 2014/0274043 A1 décrit un procédé de sélection de points d'accès Wi-Fi en fonction d'une valeur de qualité d'assistance à la localisation. Le document US 2015/0223016 A1 décrit une transmission d'une information de localisation en fonction d'informations sur d'un point d'accès.

On connaît également une solution, décrite dans le document EP 2443562, de géolocalisation à partir d'une requête DNS encapsulant des données relatives à des réseaux Wi-Fi ouverts détectés. Néanmoins, si ces données ne peuvent être transmises, elles ne sont alors pas exploitées. Il est alors impossible de reconstituer le trajet complet du traceur.

Enfin, on connait également déjà de nombreuses autres solutions qui utilisent des infrastructures spécifiques (réseau de bornes WiFi ou Bluetooth dédiées par exemple).

Ces solutions sont complexes et sont limitées aux zones où ces infrastructures sont mises en place.

### PRÉSENTATION GÉNÉRALE DE L'INVENTION

Un but général de l'invention est de proposer une solution permettant un suivi de la localisation de biens ou de personnes qui ne présentent pas les inconvénients des techniques antérieures.

Notamment, un but de l'invention est de proposer une solution permettant un suivi de la localisation de biens ou de personnes au moyen de traceurs qui soient particulièrement peu encombrants, d'un très faible coût et d'une grande autonomie.

Un autre but encore de l'invention est de permettre un suivi de localisation aussi bien en extérieur et en intérieur en s'appuyant sur l'environnement d'accès WiFi déployé classiquement dans les villes, les locaux de société, les lieux publics (gares, aéroports, musées, centres commerciaux, ...), sans nécessiter d'infrastructure dédiée particulière.

L'invention est définie par un procédé selon la revendication 1 et un traceur selon la revendication 16. Des modes de réalisation supplémentaires sont définis dans les revendications dépendantes.

Ainsi, le traceur transmet ses informations au serveur de résolution indirectement par Internet
- en utilisant les réseaux Wi-Fi ouverts se trouvant à sa portée
- de manière indirecte, à l'aide de requêtes de nom de domaine (DNS), telles que définies par les RFC 1034 et 1035 de l'IETF, spécifiquement formatées et détournées de leur finalité d'origine. La transmission est donc indirecte car propagée du module vers le serveur DNS de résolution par le serveur DNS du réseau WiFi.

On relèvera en outre que le traceur ne transmet pas à proprement parler de données de localisation, mais des données d'environnement brutes concernant les réseaux Wi-Fi (« primitives de géolocalisation ») qui lui sont en visibilité.

Un tel traceur est d'une structure particulièrement simple. Son module émetteur/récepteur WiFi est à la fois utilisé pour écouter les données d'environnement et transmettre les informations collectées.

La simplicité de l'électronique de ce traceur apporte des avantages certains en termes d'encombrement, de coût, et de consommation énergétique.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique illustrant l'architecture intervenant dans un exemple de mise en œuvre de l'invention ;
- les figures 2a et 2b illustrent deux modes de réalisation possibles pour des traceurs conformes à l'invention ;
- la figure 3 illustre différentes étapes susceptibles d'être mises en œuvre par un traceur conforme à un mode de réalisation l'invention.

### DESCRIPTION D'UN OU PLUSIEURS MODES DE MISE EN ŒUVRE ET DE RÉALISATION

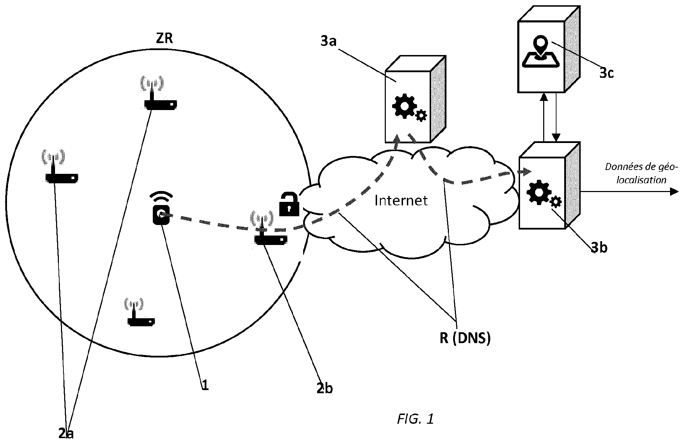

Sur la figure 1, on a illustré un traceur de géolocalisation 1, différents points d'accès Wi-Fi 2a, 2b dans la zone de réception ZR dudit traceur 1 (périmètre schématiquement délimité par des traits pointillés) et une pluralité de serveurs 3a, 3b et 3c qui interviennent dans la chaine de transmission et de traitement des données (requêtes R) transmises par le traceur 1.

### Structure du traceur

Le traceur 1 comporte pour l'essentiel une unité de traitement et un émetteur/récepteur WiFi lui permettant d'écouter l'environnement Wi-Fi autour de lui et de communiquer en Wi-Fi.

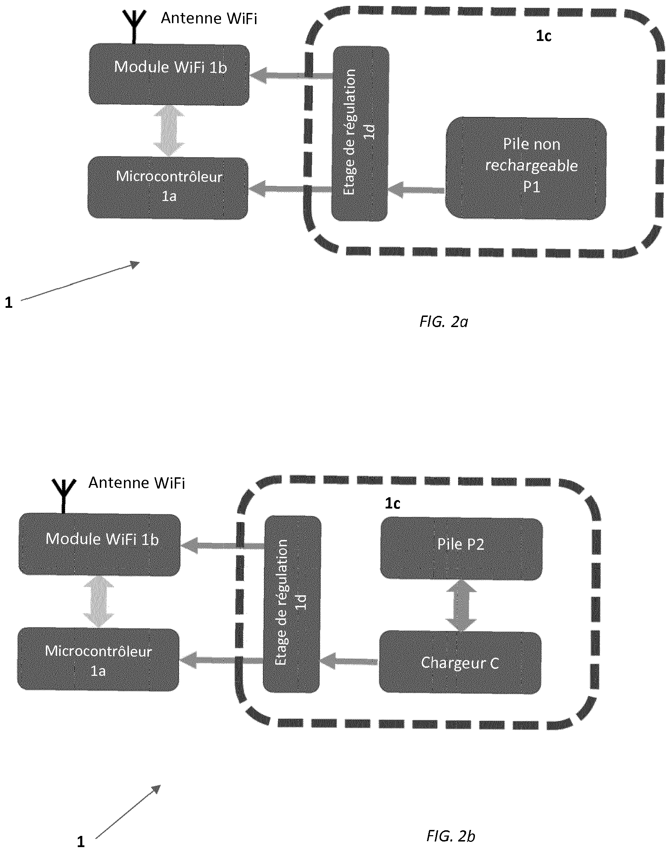

Deux exemples d'architectures particulièrement simples possibles pour le traceur 1 sont illustrés sur les figures 2a et 2b. Dans ces exemples, le traceur 1 comporte un microcontrôleur 1a, un module émetteur/récepteur WiFi 1b associé à une antenne, ainsi qu'une alimentation 1c.

L'alimentation 1c peut être assurée par une ou plusieurs piles non rechargeables montées en série (piles P1 sur la figure 2a).

L'alimentation peut également être rechargeable (pile P2 rechargeable alimentée par un chargeur C dans l'exemple de la figure 2b).

Egalement, un étage de régulation 1d peut être prévu pour protéger le microcontrôleur la et le module émetteur/récepteur 1b. Cet étage est alors interposé entre d'une part les éléments actifs que constituent ledit microcontrôleur la et ledit module 1b et d'autre part le reste du circuit d'alimentation 1c (piles P1 en série dans le cas de la figure 2a ou pile P2 et son chargeur C dans le cas de la figure 2b).

Cet étage de régulation 1d permet d'écrêter la tension appliquée en entrée du microcontrôleur la et du module 1b lorsque la tension d'alimentation est susceptible de dépasser la tension maximale supportée par le microcontrôleur la et le module émetteur/récepteur 1b.

L'électronique du traceur 1 est par exemple montée sur un support souple ou rigide (étiquette, support rigide, etc.) ou dans un boîtier de petites dimensions, ce qui permet de l'intégrer facilement à tout objet dont on souhaiterait pouvoir suivre la localisation (sacs de voyage, vêtements, colliers pour animal, etc.). Egalement, il peut se présenter sous la forme d'un patch adapté pour être collé à la peau d'un individu.

### Points d'accès

Parmi les points d'accès 2a, 2b visibles par le traceur de suivi 1, le point d'accès 2b est un point d'accès ouvert qui permet une connexion de tout appareil Wi-Fi, sans nécessiter de clé de sécurité pour l'établissement de la connexion.

On notera que de tels points d'accès ouverts 2b sont largement répandus sur le réseau Wi-Fi : hôtels, cafés, bornes Wi-Fi dans des lieux publics (gares, aéroports, musées, etc...), bornes WiFi de particuliers, qui auraient été laissées ouvertes par ceux-ci.

De tels points d'accès 2b peuvent eux-mêmes être contrôlés et nécessiter un identifiant et un mot de passe pour l'accès aux services ou plus généralement à internet.

Dans ce cas, l'utilisateur souhaitant accéder aux services doit préalablement s'enregistrer sur un portail captif.

Par opposition, les points d'accès 2a qui ne sont pas ouverts, sont ceux qui requièrent la reconnaissance d'une clé de sécurité avant tout échange de données avec un terminal sans fil.

### Serveurs

Sur la figure 1, le serveur 3a est un serveur DNS associé au point d'accès ouvert 2b.

Il reçoit du traceur 1 un message R qui se présente pour ledit serveur 3a sous la forme d'une requête DNS. Cette requête DNS générée par le traceur 1 encapsule avec un nom de domaine différentes données collectées par le traceur 1.

Ces données sont notamment des données brutes relatives à l'environnement WiFi du traceur 1 (données dites « primitives de géolocalisation »). Elles peuvent également comprendre d'autres données complémentaires.

Le message R ainsi reçu est traité par le serveur 3a comme une requête de nom de domaine. Elle est résolue comme telle par ledit serveur 3a, lequel échange à cet effet avec d'autres serveurs du réseau internet, jusqu'à atteindre le serveur 3b dont le FQDN (« Fully Qualified Domain Name » selon la terminologie anglosaxonne) est contenu dans la requête R préfixée par les données encapsulées.

Le serveur 3b reçoit ainsi les données encapsulées.

Il les traite en les désencapsulant et le cas échéant en décodant les données brutes.

Une fois les données brutes récupérées, le serveur 3b interroge le serveur 3c en lui transmettant les données butes ainsi décodées.

Ledit serveur 3c est un serveur de localisation apte fournir une information de localisation à partir des données brutes sur un environnement WiFi.

Il traite les données brutes reçues du serveur 3b, c'est-à-dire les données collectées par le traceur 1 sur les réseaux Wi-Fi visibles dans son environnement, et retourne audit serveur 3b une information de localisation (coordonnées de latitude ou longitude (système géodésique WGS 84, couramment utilisé, notamment par le système GPS)).

Ledit serveur 3c peut être interrogé à distance via internet (service en ligne) ou être un serveur propriétaire.

### Données brutes d'environnement - primitives de localisation

Les données brutes d'environnement collectées par le traceur 1 - ou primitives de la localisation - sont issues des points d'accès Wi-Fi 2a, 2b les plus visibles dudit traceur 1 (point d'accès pour lesquels ledit traceur 1 reçoit un signal WiFi avec le meilleur niveau de signal).

Ces points d'accès peuvent être sélectionnés par le microcontrôleur la du traceur 1 par comparaison à un seuil, ou encore en sélectionnant les N points d'accès WiFi les plus visibles par ledit traceur (ou N est un entier supérieur ou égal à 1.

De ces points d'accès, tout ou partie des informations suivantes sont collectées :
- Nom du réseau diffusé par le point accès (SSID),
- Identifiant du point d'accès (BSSID),
- Niveau de puissance du signal reçu, en dBm (RSSI).

Par exemple, avec les données de 3 points d'accès, les données brutes collectées par le capteur seront des données alphanumériques reprenant ces trois types d'information pour chacun des trois points.

| | | |
|---|---|---|
| Point_Acces_1_SSID | Point_Acces_1_BSSID | Point_Acces_1_RSSI |
| Point_Acces_2_SSID | Point_Acces_2_BSSID | Point_Acces_2_RSSI |
| Point_Acces_3_SSID | Point_Acces_3_BSSID | Point_Acces_3_RSSI |

Des implémentations avec un nombre différents de points d'accès sont également possibles, la collecte d'informations sur un seul point d'accès permettant en elle-même de fournir une information de localisation. La multiplication des points d'accès et des informations collectées permet une triangulation et ainsi une meilleure précision sur la localisation.

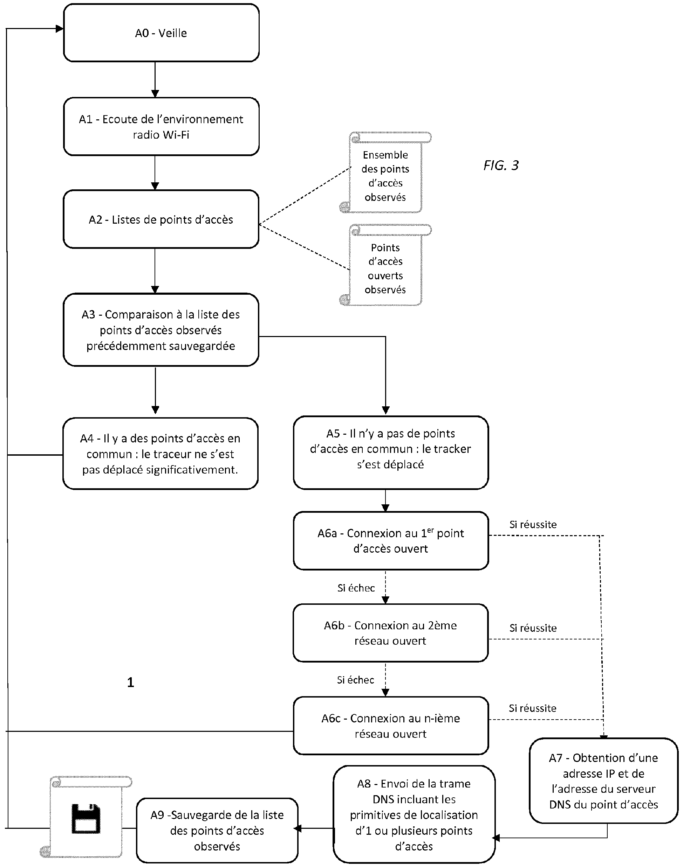

### Fonctionnement interne du traceur de suivi (Figure 3)

Le microcontrôleur la (microcontrôleur 1b) alterne entre un état de veille profonde (A0), lui permettant d'économiser l'alimentation du traceur, et un état de réveil dans lequel il effectue une tentative de transmission de données.

Par exemple, sur un cycle d'une heure, il peut être en veille pendant 59' et 55 secondes à un niveau de consommation énergétique très faible, et se réveiller 5 secondes pour effectuer ses tâches.

Une fois réveillé, le microcontrôleur 1b effectue une séquence de tâches du type de celles illustrées sur la figure 3.

Notamment :
- il écoute son environnement WiFi et détecte les points d'accès (étape A1),
- il mémorise (étape A2) :
   - la liste de l'ensemble des points d'accès Wi-Fi environnants visibles par le récepteur Wi-Fi,
   - la liste des réseaux ouverts par ordre décroissant de force du signal des points d'accès correspondants, lorsque un ou plusieurs réseaux de ce type sont visibles.

Les différents points d'accès peuvent être identifiés sont identifiés par leur BSSID (identifiant de station), et le cas échéant par leur SSID (identifiant de réseau), le microcontrôleur la pouvant également mémoriser le niveau (RSSI) du signal qu'il reçoit de ces réseaux.

Le microcontrôleur la compare alors la première liste (celle de l'ensemble des points d'accès observés) à celle du dernier cycle ayant permis une localisation (étape A3).

Lorsqu'il y a des points d'accès en commun, le microcontrôleur la considère que le traceur 1 ne s'est pas déplacé significativement et se remet en veille (étape A4) jusqu'au prochain cycle.

Dans le cas contraire (A5), le microcontrôleur la cherche à se connecter aux réseaux ouverts (étapes A6a, A6b, A6c...).

Si aucun réseau ouvert n'a été détecté lors du cycle en cours, le microcontrôleur la interrompt sa séquence et se remet dans un état de veille.

Si un ou plusieurs réseaux ouverts ont été détecté, le microcontrôleur la tente de se connecter au réseau identifié pour lequel il a détecté le niveau de puissance le plus élevé, d'obtenir une adresse IP, et enfin d'obtenir les paramètres du serveur DNS (le serveur 3a sur la figure 1) lié à ce réseau (étape A7).

Si la connexion Wi-Fi réussit, que le microcontrôleur la a réussi à récupérer l'adresse IP, et qu'il récupère l'adresse d'un serveur DNS, alors il génère une requête DNS telle que décrite ci-dessous et l'envoie à ce serveur DNS (étape A8).

Si cette séquence est interrompue pour quelque raison, ou que le microcontrôleur la échoue à envoyer son message, il tente alors de se connecter sur réseau ouvert suivant qu'il a mémorisé (par niveau de signal décroissant) ; s'il a épuisé la liste il se remet en veille jusqu'au prochain cycle.

En cas de succès, avant de se remettre en veille, le microcontrôleur la mémorise la liste des points d'accès observés lors de ce cycle (étape A9).

### Construction de la requête

Dans une requête DNS, la syntaxe possible pour la définition nom de domaine est contrainte par la norme.

La longueur totale du domaine DNS reste toujours inférieure à 255 octets. Les données sont réparties dans des labels de taille inférieure à 63 octets conformément au §2.3.4 de la RFC 1035. Seuls les caractères ASCII sont autorisés.

La requête DNS générée par le microcontrôleur la est constituée de l'assemblage :
- des données brutes à transmettre exprimées dans un format de sous-domaines en conformité avec la norme DNS,
- du nom de domaine (FQDN) du serveur 3b.

Cet assemblage dans lequel les données brutes sont encapsulées, doit respecter les règles de syntaxe des noms de domaine.

Dans une première implémentation, les données brutes sont encapsulées sans ré-encodage dans un sous-domaine DNS, les données binaires étant inscrites sous forme de chaines de caractères représentant leur valeur hexadécimale, les données textuelles alphanumériques sous forme de chaîne de caractères ASCII.

Pour les textes alphanumériques à transmettre (champ SSID), seuls sont conservés les caractères alphanumériques [A-Z] [a-z] [0-9] et les caractères « moins » ( - ) et le tiret bas ( _ ) afin de respecter le format d'un sous-domaine dans la norme DNS.

En plus des données SSID, BSSID, RSSI du ou des réseaux correspondant aux différents points d'accès (AP) détectés, le microcontrôleur la peut également transmettre le numéro de version du traceur 1, le numéro de cycle ou séquence, ...

La trame peut commencer par un ou plusieurs bits drapeau (« Flag ») permettant d'indiquer au serveur qu'il s'agit d'une requête émise par un traceur.

Elle se termine par la séquence FQDN du serveur 3b « sous-domaine.domaine.tld », ou tld désigne le nom de domaine racine.

Par exemple, la requête DNS peut être constituée de la façon suivante, en prenant garde à respecter la longueur de 255 octets :

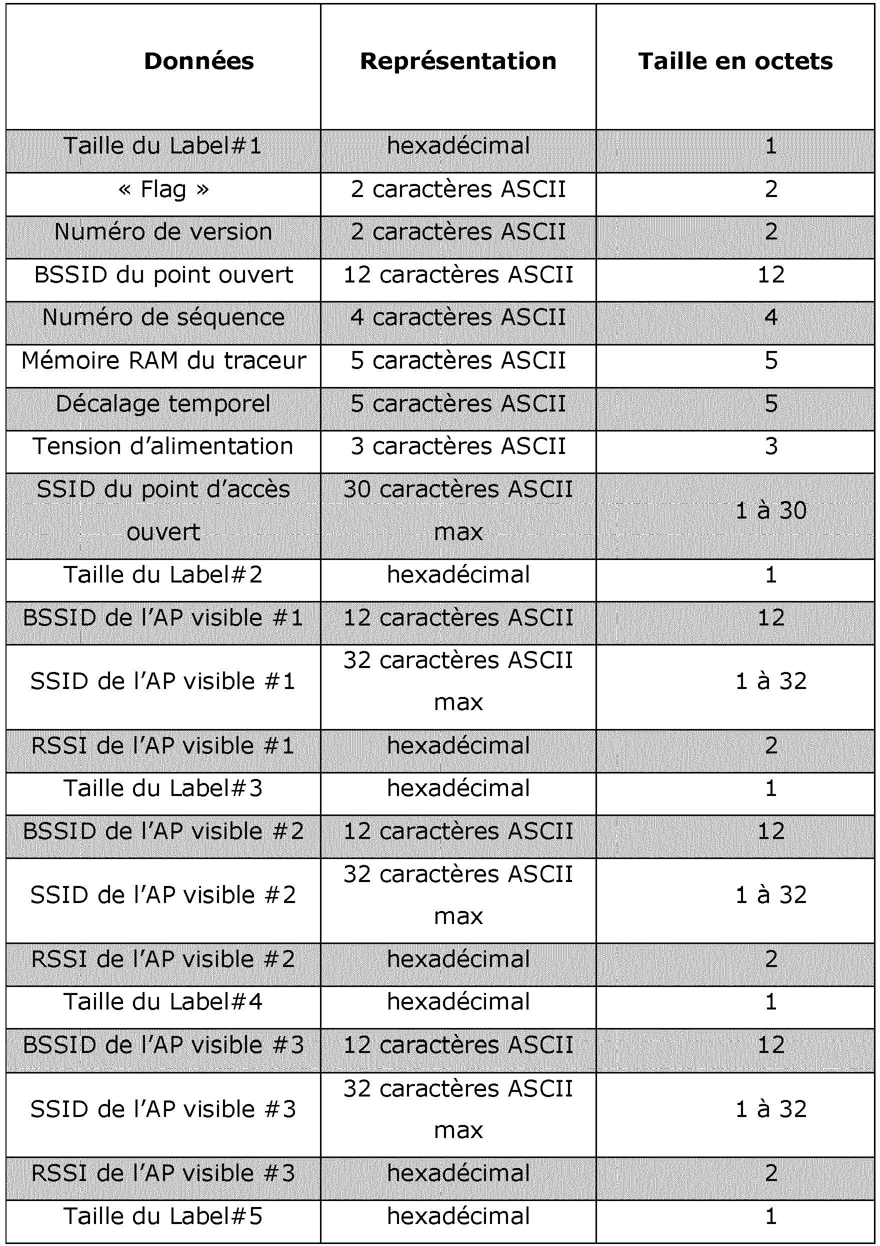

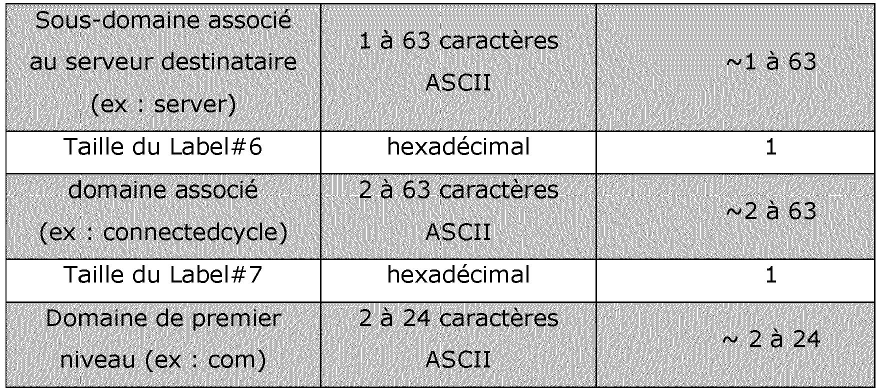

Il a été vérifié que la plupart des accès Wi-Fi ouverts permettent l'envoi de cette trame, et la plupart des serveurs DNS associés à ces accès l'interprètent correctement.

D'autres implémentations sont également possibles, notamment des implémentations utilisant un codage « binaire vers texte », comme par exemple un codage base 64 (URL-safe, selon la norme IETF RFC4648 §5) ou un codage base 32 (URL safe selon la norme IETF RFC4648 §6) permettant de compacter les données en les rendant compatibles avec la norme DNS.

Pour cela, les données sont par exemple préparées de la façon suivante.

Tout d'abord, une chaine hexadécimale est constituée :

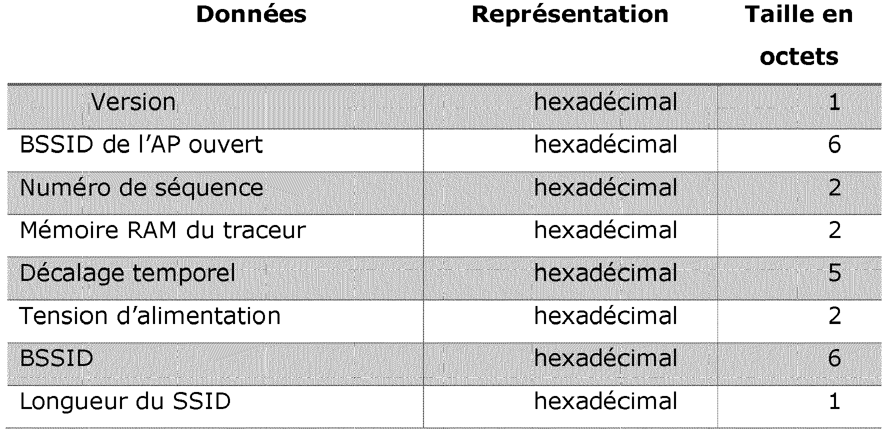

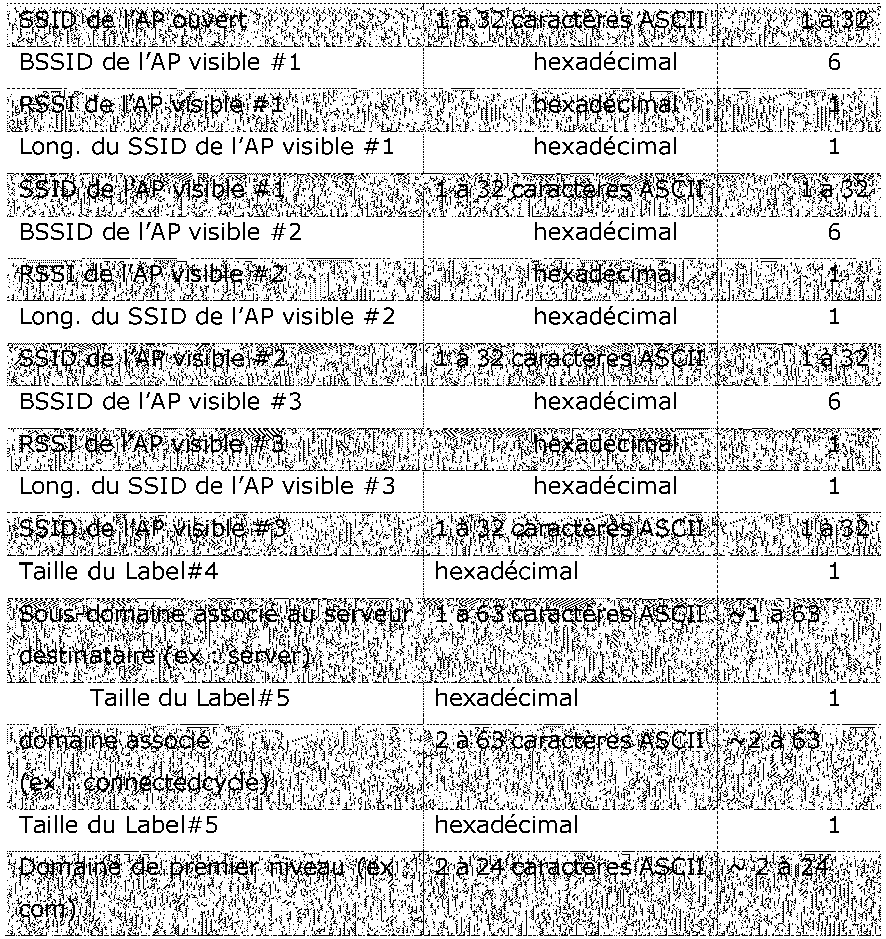

Ces données sont encodées dans une chaine de caractère suivant les encodages précisés ci-dessus.

Une fois encodées, les données sont précédées d'un préfixe drapeau (« flag ») de 2 caractères ASCII.

Cette chaîne est alors découpée en labels de 63 octets préfixée par un octet indiquant la taille, sauf pour le dernier label qui peut être plus court que 63 octets. Elle est suffixée par le FQDN (Labels #4, 5 et 6 et octets de tailles correspondants) :

| Taille | Label #1 | Taille | Label #2 | Taille | Label #3 | Taille | Label #4 | Taille | Label #5 | Taille | Label #6 |
|---|---|---|---|---|---|---|---|---|---|---|---|
| = 63 o | données | = 63 o | données | = 50 o | données | = 2 o | sous-domaine | =4 o | domaine | = 3 o | TLD |

### Propagation de la requête par les serveurs DNS

Le serveur DNS 3a associé au fournisseur d'accès du point d'accès sur lequel le module s'est connecté reçoit la requête DNS du module et cherche à résoudre le sous-domaine associé au nom de domaine utilisé.

Par exemple pour une requête telle que celle-ci :

Afin que la requête parvienne au serveur de résolution 3b, une entrée spécifique NS a été préalablement créée dans la zone DNS du domaine (zone de domaine.com dans l'exemple), indiquant que la gestion de ce sous-domaine est déléguée. Cette entrée NS est paramétrée avec les informations nécessaires à la résolution.

Le serveur DNS de l'accès Wi-Fi interroge ainsi un serveur racine pour obtenir un serveur DNS pour « .com », puis interroge ce dernier pour obtenir celui pour « domaine.com », et enfin interroge ce dernier pour obtenir celui de « resolution.domaine.com » (adresse du sous-domaine).

La requête DNS finit donc par être envoyée au serveur de résolution, qui désencapsule le message, le cas échéant le décode. Le serveur de résolution résout les données connectées en information de localisation, puis le serveur 3b transmet l'information de géolocalisation décodée à un système d'information ou une base de données.

### Traitement réalisé par le serveur de résolution

Le serveur de résolution décode l'information. Pour cela :
1. Il commence par s'assurer qu'il s'agit bien d'une requête en provenance d'un module, notamment en lisant le ou les octets drapeau « Flag » et en vérifiant que le sous-domaine demandé correspond. D'autres mécanismes permettant de vérifier l'origine de la requête sont envisageables (somme de contrôle, signature, cryptage, ...)
2. Il retire le préfixe, le suffixe ex : « .sous-domaine.domaine.com », et supprime tous les octet « Taille de label » afin de reconstituer la séquence de données utiles (au format ASCII).

| Label #1 | Label #2 | Label #3 |
|---|---|---|
| données | données | données |

3. Les données ainsi obtenues sont décodées en suivant l'algorithme inverse de celui qui a été utilisé pour le codage dans le module.
4. Les données décodées sont ensuite décomposées pour retrouver les valeurs de chaque champ.

Une fois que l'ensemble des informations ont été récoltées, il peut alors demander la résolution des informations collectées en informations de géolocalisation soit via un algorithme qu'il implémente lui-même, soit via un service commercial externe (API) qu'il interroge à cette fin.

Pour cela, il envoie une partie des données reçues à son algorithme ou à l'API externe (serveur 3c par exemple).

Les données nécessaires correspondent à des informations concernant les points d'accès visibles dont le signal a été le plus fort.

Pour chaque point d'accès, il s'agit par exemple :
- de l'identifiant du point d'accès (BSSID),
- et/ou du nom du réseau (SSID),
- et/ou du niveau de champ (RSSI).

Par exemple, les données relatives aux points d'accès Wi-Fi peuvent être encodées au format JSON de la façon suivante (cas de trois points d'accès) :

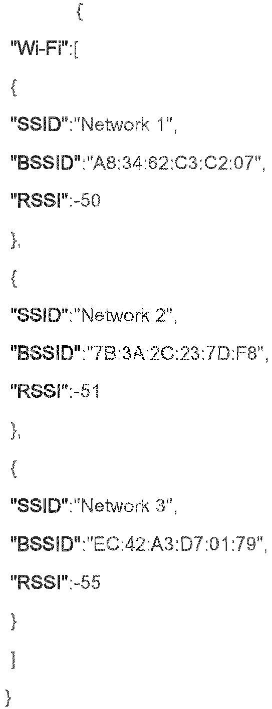

La requête à cette API est effectuée en HTTP, le serveur retourne alors les informations dans une réponse HTTP. Lorsque le serveur a pu résoudre avec succès l'environnement Wi-Fi en coordonnées GPS, la réponse contient généralement :
- la latitude estimée,
- la longitude estimée,
- la précision (en mètres),
- l'adresse postale si les coordonnées GPS ont également pu être résolues en adresse postale.

### Mémorisation des informations d'environnement lorsqu'aucun accès ouvert n'est disponible :

Le traceur 1, lorsqu'il ne dispose pas d'un réseau ouvert à proximité au cours d'un cycle, ou si les caractéristiques de ce cycle correspondent à certaines règles internes qu'il implémente, mémorise dans une mémoire volatile ou non les informations d'environnement Wi-Fi qui auraient dû être transmises pour les envoyer de manière différée au cours d'un cycle suivant pour lequel un réseau ouvert sera accessible, afin que le serveur puisse reconstituer le trajet parcouru avec plus de détails.

### Divers

*Constitution d'une liste noire de réseaux à éviter pour la connexion* :
Egalement, le traceur 1 peut stocker dans une mémoire volatile ou non la liste des réseaux (désignées par leur SSID et BSSID) auxquels il n'a pas pu se connecter, au bout d'une ou plusieurs tentatives. Cela lui-permet de se constituer une liste noire de réseaux auquel il ne tentera plus de se connecter ultérieurement, soit si le SSID est identique, soit si le BSSID est identique. Cette liste noire pourra être récupérée par tout moyen en ligne ou hors-ligne afin de pouvoir munir une nouvelle version du logiciel du dispositif d'une liste de réseaux préconfigurés en liste noire.

Le traceur 1 peut notamment être préconfiguré avec une liste de réseaux ouverts identifiés par SSID ou BSSID auxquels il lui est interdit de se connecter liste noire.

### Liste de réseaux préférés

Le traceur 1 peut être muni par programmation d'une liste de réseaux ouverts préférés auxquels il se connectera prioritairement s'ils sont visibles. De plus, il peut être munis d'identifiants permettant de se connecter à certains réseaux fermés qu'il détecterait dans son environnement

### Détection de mouvement ou détection de sédentarité :

En cas de succès d'émission de l'information de localisation, le traceur 1 peut enregistrer tout ou partie des réseaux visibles jusqu'au prochain cycle. Lorsque le nouveau cycle intervient, le traceur 1 récupère à nouveau la liste des réseau environnants, et la compare à la liste précédente pour savoir si le traceur a bougé ou non : si un ou plusieurs réseaux sont identiques entre les deux listes, le traceur n'a pas bougé ou a bougé d'une distance faible ( < 100 m généralement).

Lorsque ledit traceur 1 n'a pas bougé, il peut se remettre immédiatement en veille sans effectuer un cycle d'émission afin d'économiser de l'énergie), compte tenu du fait que sa localisation est déjà connue depuis le cycle précédent.

Il peut également automatiquement allonger la temporisation entre les cycles s'il détecte que le module n'est pas en mouvement.

Il peut aussi forcer son émission, lors d'un réveil, après un certain nombre de cycles sans mouvement.

Dans certains d'usages, on peut aussi souhaiter utiliser le mécanisme à l'inverse : les positions ne sont alors transmises que lorsque le module ne bouge pas.

### Diversité des Point d'accès utilisés pour la localisation

Le traceur 1 se base sur un sous-ensemble du BSSID des points d'accès wifi environnants pour éliminer l'un de deux réseaux similaires qui seraient en fait émis par un même point d'accès physique et nuirait à la diversité recherchée pour les 3 identifiants de point d'accès servant de primitive à la géolocalisation.

### Signature et cryptage des données

Le module peut crypter les données brutes à l'aide d'une clé numérique, avant que celles-ci ne soient adaptées au format DNS. Le serveur effectue alors le traitement de décryptage.

Le module peut réaliser une signature numérique des données brutes contenues dans la requête DNS, la signature étant également adaptée pour être transmise au format DNS dans la même requête. Le serveur effectue la vérification de la signature.

Le module et le serveur peuvent réaliser une combinaison des deux variantes précédentes.

### Visibilité d'équipements Bluetooth

Egalement, la primitive de localisation utilisée peut intégrer la visibilité d'équipements Bluetooth identifiés par leur identifiant de dispositifs, uniquement (lorsqu'aucun hotspots WiFi) n'est détecté ou en complément d'identifiants de hotspots wifi.

### Données d'un capteur externe

Le traceur 1 peut en outre être muni d'un capteur de mesure de grandeurs physiques externes, dont les données sont transmises dans la requête DNS.

Un tel capteur peut être un capteur barométrique dont les données sont destinées à être converties par le serveur 3b en données d'altitude, un capteur d'accélération(s), un capteur de température ou encore un capteur de données de pollution (capteur de concentration de particules polluantes). D'autres types de capteurs sont bien entendu possibles.

### Re-paramétrage du module initié par le serveur DNS :

En variante encore, le traceur 1, après avoir émis une requête DNS se met à l'écoute d'une réponse DNS du serveur. Il peut se servir de cette réponse d'une part pour s'assurer que le serveur a bien reçu sa transmission (acquittement) : si la requête DNS n'est pas acquittée, le module peut tenter de la réémettre à travers un autre point d'accès ouvert.

D'autre part, la réponse DNS peut permettre de recevoir une information lui permettant de reconfigurer certains paramètres (ex : changement de sa fréquence d'émission, etc...). La réponse DNS peut également permettre de mettre à jour le micrologiciel du traceur (1), par exemple si le module est connecté à un réseau fermé.

*Utilisation des données Wi-Fi pour déterminer l'altitude ou un étage :*
En variante encore, les données d'environnement Wi-Fi servent également à déterminer l'étage ou l'altitude approximative du module.

## Revendications

1. Procédé de géolocalisation d'un bien ou d'une personne dans lequel un microcontrôleur (1a) d'un traceur (1) associé audit bien ou à ladite personne met en œuvre un cycle comportant un état de veille profonde et un état de réveil, au cours duquel il effectue les étapes suivantes :
• détection de réseaux Wi-Fi et points d'accès (2a, 2b) associés se trouvant à sa portée,
• collecte de données brutes relatives à au moins réseau Wi-Fi détecté et à au moins un point d'accès (2a, 2b) par lequel ledit réseau est rendu visible audit traceur (1),
• lorsqu'un réseau Wi-Fi ouvert est détecté,
∘ connexion au réseau Wi-Fi,
∘ obtention d'une adresse IP et des paramètres d'un serveur de nom de domaine, DNS, associé au point d'accès (2b),
o génération et transmission audit serveur DNS d'une requête DNS encapsulant lesdites données brutes avec un nom de domaine correspondant à un serveur de résolution adapté pour traiter la requête pour récupérer lesdites données brutes et à interroger avec celles-ci un serveur de localisation lui-même adapté pour fournir une information de localisation à partir de données brutes sur un environnement Wi-Fi,
• lorsqu'aucun réseau Wi-Fi ouvert n'est détecté au cours d'un cycle,
o mémorisation, dans une mémoire, desdites données brutes qui auraient dû être transmises,
o envoi desdites données brutes de manière différée au cours d'un cycle suivant,
ledit procédé comprenant en outre les étapes suivantes, mises en œuvre avant que le microcontrôleur (1a) cherche à se connecter à un réseau Wi-Fi ouvert :
• comparaison d'une liste des points d'accès (2a, 2b) Wi-Fi détectés à une liste des points d'accès (2a, 2b) Wi-Fi mémorisée lors du dernier cycle ayant permis une localisation,
• mise en veille du microcontrôleur (1a) jusqu'à un prochain cycle lorsque les deux listes comportent des points d'accès (2a, 2b) en commun.

2. Procédé selon la revendication 1, dans lequel le traceur (1) est muni d'identifiants qu'il mémorise et qui lui permettent de se connecter à des réseaux fermés qu'il détecterait dans son environnement.

3. Procédé selon la revendication 1 ou la revendication 2, dans lequel le traceur (1) est préconfiguré avec une liste de réseaux ouverts auxquels il lui est interdit de se connecter.

4. Procédé selon l'une des revendications précédentes, dans lequel des données brutes comprennent un identifiant de point d'accès (2a, 2b), BSSID, et/ou un nom de réseau, SSID, et/ou un niveau de puissance du signal reçu, RSSI.

5. Procédé selon l'une des revendications précédentes, dans lequel les données sont concaténées dans une chaine hexadécimale, ladite chaine étant ensuite encodée en texte, puis encapsulée dans la requête DNS.

6. Procédé selon la revendication 5, dans lequel pour les données alphanumériques, seuls sont conservés les caractères alphanumériques [A-Z] [a-z] [0-9] et les caractères « moins » et « tiret bas », les données binaires étant exprimées dans leur valeur hexadécimale convertie en texte ASCII, les données alphanumériques et les données binaires converties en texte ASCII étant ensuite encapsulées dans la requête DNS.

7. Procédé selon l'une des revendications précédentes, dans lequel lorsque plusieurs réseaux Wi-Fi ouverts sont détectés, le traceur (1) tente de s'y connecter par niveaux de signal décroissant.

8. Procédé selon l'une des revendications précédentes, dans lequel les données brutes encapsulées comportent des données d'au moins un capteur de mesure de grandeurs physiques externes.

9. Procédé selon l'une des revendications précédentes, dans lequel les données brutes encapsulées comportent des données d'au moins un parmi un numéro de cycle, un numéro de version du logiciel du traceur (1), des paramètres de configuration, une tension d'alimentation, une information horaire.

10. Procédé selon l'une des revendications précédentes, comprenant en outre une étape de reconfiguration de certains paramètres du traceur (1) suite à la réception d'une réponse DNS, et/ou de mise à jour du logiciel du traceur (1).

11. Procédé selon la revendication 10, dans lequel le traceur mémorise des grandeurs physiques externes lorsqu'aucun accès ouvert n'est disponible.

12. Procédé selon l'une des revendications précédentes, comprenant en outre une étape d'élimination par le traceur (1) de l'un de deux réseaux similaires qui seraient émis par un même point d'accès (2a, 2b) physique, le traceur (1) se basant sur un sous-ensemble du BSSID des points d'accès (2a, 2b) Wi-Fi environnants.

13. Procédé selon l'une des revendications précédentes, dans lequel le traceur (1) met également en œuvre une détection de réseaux Bluetooth et dans lequel les données brutes encapsulées comportent des données relatives à au moins un équipement Bluetooth, lorsqu'un tel équipement est visible par le traceur (1).

14. Procédé selon l'une des revendications précédentes, comportant en outre les étapes suivantes, effectuées par le serveur de résolution :
- réception de la requête DNS générée et transmise par le traceur (1),
- traitement de la requête pour y récupérer les données brutes relatives à l'au moins réseau Wi-Fi détecté par le traceur (1) et
- interrogation, avec lesdites données brutes, du serveur de localisation adapté pour fournir l'information de localisation à partir de données brutes sur l'environnement Wi-Fi.

15. Procédé selon la revendication 14, dans lequel ledit serveur de résolution désencapsule lesdites données brutes et le cas échéant décode lesdites données brutes.

16. Traceur (1) de géolocalisation de biens ou de personnes comportant un microcontrôleur (1a), un module émetteur/récepteur Wi-Fi, ainsi qu'une alimentation, dans lequel le microcontrôleur (1a) est adapté pour mettre en œuvre le procédé selon l'une des revendications 1 à 13.

17. Traceur (1) selon la revendication 16, comportant en outre au moins un capteur de mesure de grandeurs physiques externes.

18. Système de géolocalisation de biens ou services comportant au moins un traceur (1) selon la revendication 16 ou la revendication 17 et un serveur de résolution adapté pour mettre en œuvre un procédé selon la revendication 14 ou selon la revendication 15.

## Patentansprüche

1. Verfahren zur Geolokalisierung eines Objekts oder einer Person, bei dem ein Mikrocontroller (1a) eines dem Objekt oder der Person zugeordneten Trackers (1) einen Zyklus ausführt, der einen Tiefschlafzustand und einen Aufwachzustand umfasst, während dessen er die folgenden Schritte durchführt:
• Erkennen von Wi-Fi-Netzen und zugehörigen Zugangspunkten (2a, 2b) innerhalb seiner Reichweite,
• Erfassen von Rohdaten, die sich auf mindestens ein erkanntes Wi-Fi-Netz und mindestens einen Zugangspunkt (2a, 2b) beziehen, über den das Netz für den Tracker (1) sichtbar gemacht wird,
• wenn ein offenes Wi-Fi-Netz erkannt wird,
∘ Verbinden mit dem Wi-Fi-Netz,
∘ Erlangen einer IP -Adresse und der Parameter eines Domain Name Servers, DNS, der mit dem Zugangspunkt (2b) verbunden ist,
∘ Erzeugen und Übertragen einer DNS-Anfrage an den DNS-Server, die die Rohdaten mit einem Domänennamen einkapselt, der einem Auflösungsserver entspricht, der dazu ausgelegt ist, die Anfrage zum Abrufen der Rohdaten zu verarbeiten und hiermit einen Standortserver abzufragen, der selbst dazu ausgelegt ist, Standortinformationen ausgehend von den Rohdaten über eine Wi-Fi-Umgebung bereitzustellen,
• wenn während eines Zyklus kein offenes Wi-Fi-Netz erkannt wird,
∘ Speichern der Rohdaten, die hätten übermittelt werden müssen, in einem Speicher,
∘ verzögertes Senden der Rohdaten in einem nachfolgenden Zyklus,
wobei das Verfahren ferner die folgenden Schritte umfasst, die ausgeführt werden, bevor der Mikrocontroller (1a) versucht, eine Verbindung zu einem offenen Wi-Fi-Netz herzustellen:
• Vergleichen einer Liste von erkannten Wi-Fi-Zugangspunkten (2a, 2b) mit einer Liste von Wi-Fi-Zugangspunkten (2a, 2b), die während des letzten Zyklus, der eine Lokalisierung erlaubte, gespeichert wurde,
• Versetzen des Mikrocontrollers (1a) bis zum nächsten Zyklus in den Schlafzustand, wenn beide Listen gemeinsame Zugangspunkte (2a, 2b) aufweisen.

2. Verfahren nach Anspruch 1, wobei der Tracker (1) mit Kennungen versehen wird, die er speichert und die es ihm ermöglichen, sich mit geschlossenen Netzen zu verbinden, die er in seiner Umgebung erkennen würde.

3. Verfahren nach Anspruch 1 oder Anspruch 2, wobei der Tracker (1) mit einer Liste offener Netze vorkonfiguriert ist, mit denen er sich nicht verbinden darf.

4. Verfahren nach einem der vorstehenden Ansprüche, wobei die Rohdaten eine Zugangspunktkennung (2a, 2b), BSSID, und/oder einen Netznamen, SSID, und/oder einen Empfangssignalstärkepegel, RSSI, umfassen.

5. Verfahren nach einem der vorstehenden Ansprüche, wobei die Daten zu einer hexadezimalen Zeichenkette verkettet werden, wobei die Zeichenkette dann in Text kodiert und anschließend in die DNS-Anfrage eingekapselt wird.

6. Verfahren nach Anspruch 5, wobei für die alphanumerischen Daten nur die alphanumerischen Zeichen [A-Z] [a-z] [0-9] und die Zeichen "Minus" und "Unterstrich" beibehalten werden, wobei die binären Daten in ihrem hexadezimalen Wert ausgedrückt und in ASCII-Text umgewandelt werden, wobei die alphanumerischen Daten und die in ASCII-Text umgewandelten binären Daten dann in die DNS-Anfrage eingekapselt werden.

7. Verfahren nach einem der vorstehenden Ansprüche, wobei, wenn mehrere offene Wi-Fi-Netze erkannt werden, der Tracker (1) versucht, sich mit abnehmenden Signalpegeln mit diesen zu verbinden.

8. Verfahren nach einem der vorstehenden Ansprüche, wobei die eingekapselten Rohdaten Daten von mindestens einem Sensor zur Messung externer physikalischer Größen umfassen.

9. Verfahren nach einem der vorstehenden Ansprüche, wobei die eingekapselten Rohdaten Daten von mindestens einem von einer Zyklusnummer, einer Versionsnummer der Tracker-Software (1), Konfigurationsparametern, Versorgungsspannung, Zeitinformationen umfassen.

10. Verfahren nach einem der vorstehenden Ansprüche, ferner umfassend einen Schritt zur Neukonfiguration bestimmter Parameter des Trackers (1) nach dem Empfang einer DNS-Antwort und/oder zur Aktualisierung der Software des Trackers (1).

11. Verfahren nach Anspruch 10, wobei der Tracker externe physikalische Größen speichert, wenn kein offener Zugang verfügbar ist.

12. Verfahren nach einem der vorstehenden Ansprüche, ferner umfassend einen Schritt, bei dem der Tracker (1) eines von zwei ähnlichen Netzen eliminiert, die von demselben physischen Zugangspunkt (2a, 2b) ausgestrahlt werden würden, wobei der Tracker (1) auf einer Teilmenge der BSSID der umgebenden Wi-Fi-Zugangspunkte (2a, 2b) basiert.

13. Verfahren nach einem der vorstehenden Ansprüche, wobei der Tracker (1) auch eine Bluetooth-Netzerkennung implementiert und wobei die eingekapselten Rohdaten Daten umfassen, die sich auf mindestens eine Bluetooth-Vorrichtung beziehen, wobei eine solche Vorrichtung für den Tracker (1) sichtbar ist.

14. Verfahren nach einem der vorstehenden Ansprüche, umfassend ferner die folgenden Schritte, die vom Auflösungsserver durchgeführt werden:
- Empfangen der vom Tracker (1) erzeugten und übermittelten DNS-Anfrage,
- Verarbeitung der Anfrage zum Abrufen von Rohdaten in Bezug auf das mindestens eine vom Tracker (1) erkannte Wi-Fi-Netz und
- Abfragen, mit den Rohdaten, des Standortservers, der in der Lage ist, Standortinformationen ausgehend von den Rohdaten über die Wi-Fi-Umgebung bereitzustellen.

15. Verfahren nach Anspruch 14, wobei der Auflösungsserver die Rohdaten entkapselt und optional die Rohdaten decodiert.

16. Tracker (1) zur Geolokalisierung von Objekten oder Personen, umfassend einen Mikrocontroller (1a), ein Wi-Fi-Sende-/Empfangsmodul sowie eine Stromversorgung, wobei der Mikrocontroller (1a) dafür ausgelegt ist, das Verfahren nach einem der Ansprüche 1 bis 13 durchzuführen.

17. Tracker (1) nach Anspruch 16, der ferner mindestens einen Sensor zur Messung externer physikalischer Größen umfasst.

18. System zur Geolokalisierung von Objekten oder Dienstleistungen, umfassend mindestens einen Tracker (1) nach Anspruch 16 oder Anspruch 17 und einen Auflösungsserver, der dafür ausgelegt ist, ein Verfahren nach Anspruch 14 oder Anspruch 15 durchzuführen.

## Claims

1. A method for geolocating a good or a person wherein a microcontroller (1a) of a tracker (1) associated with said good or with said person implements a cycle including a deep sleep state and an awake state, during which it performs the following steps:
• detecting Wi-Fi networks and associated access points (2a, 2b) within its range,
• collecting raw data relating to at least one detected Wi-Fi network and to at least one access point (2a, 2b) through which said network is made visible to said tracker (1),
• when an open Wi-Fi network is detected,
∘ connecting to the Wi-Fi network,
∘ obtaining an IP address and the parameters of a domain name server, DNS, associated with the access point (2b),
∘ generating and transmitting to said DNS server a DNS request encapsulating said raw data with a domain name corresponding to a resolution server adapted to process the request for retrieving said raw data and to query therewith a location server itself adapted to provide location information from raw data over a Wi-Fi environment,
• when no open Wi-Fi network is detected during a cycle,
∘ storing, in a memory, said raw data which should have been transmitted,
∘ sending said raw data in a delayed manner during a following cycle,
said method further comprising the following steps, implemented before the microcontroller (1a) seeks to connect to an open Wi-Fi network:
• comparing a list of the detected Wi-Fi access points (2a, 2b) with a list of the Wi-Fi access points (2a, 2b) stored during the last cycle having allowed a location,
• putting the microcontroller (1a) on a sleep state until a next cycle when the two lists include access points (2a, 2b) in common.

2. The method according to claim 1, wherein the tracker (1) is provided with identifiers it stores and which allow it to connect to closed networks it would detect in its environment.

3. The method according to claim 1 or 2, wherein the tracker (1) is preconfigured with a list of open networks to which it is prohibited from connecting.

4. The method according to any of the preceding claims, wherein raw data comprise an access point identifier (2a, 2b), BSSID, and/or a network name, SSID, and/or a power level of the received signal, RSSI.

5. The method according to any of the preceding claims, wherein the data are concatenated in a hexadecimal string, said string then being encoded in text, then encapsulated in the DNS request.

6. The method according to claim 5, wherein for the alphanumeric data, only the alphanumeric characters [A-Z] [a-z] [0-9] and the "minus" and "underscore" characters are preserved, the binary data being expressed in their hexadecimal value converted into ASCII text, the alphanumeric data and the binary data converted into ASCII text then being encapsulated in the DNS request.

7. The method according to any of the preceding claims, wherein when several open Wi-Fi networks are detected, the tracker (1) attempts to connect thereto by decreasing signal levels.

8. The method according to any of the preceding claims, wherein the encapsulated raw data include data of at least one external physical quantity measurement sensor.

9. The method according to any of the preceding claims, wherein the encapsulated raw data include data of at least one among a cycle number, a version number of the software of the tracker (1), configuration parameters, a power supply voltage, time information.

10. The method according to any of the preceding claims, further comprising a step of reconfiguring some parameters of the tracker (1) after receiving a DNS response, and/or of updating the software of the tracker (1).

11. The method according to claim 10, wherein the tracker stores external physical quantities when no open access is available.

12. The method according to any of the preceding claims, further comprising a step of eliminating, by the tracker (1), one of two similar networks which would be emitted by a same physical access point (2a, 2b), the tracker (1) being based on a subset of the BSSID of the surrounding Wi-Fi access points (2a, 2b).

13. The method according to any of the preceding claims, wherein the tracker (1) also implements Bluetooth network detection and wherein the encapsulated raw data include data relating to at least one Bluetooth piece of equipment, when such equipment is visible by the tracker (1).

14. The method according to any of the preceding claims, further including the following steps, performed by the resolution server:
- receiving the DNS request generated and transmitted by the tracker (1),
- processing the request to retrieve therefrom the raw data relating to the at least one Wi-Fi network detected by the tracker (1), and
- querying, with said raw data, the location server adapted to provide the location information from raw data on the Wi-Fi environment.

15. The method according to claim 14, wherein said resolution server decapsulates said raw data and where appropriate decodes said raw data.

16. A tracker (1) for geolocating goods or persons including a microcontroller (1a), a Wi-Fi transceiver module, as well as a power supply, wherein the microcontroller (1a) is adapted to implement the method according to any of claims 1 to 13.

17. The tracker (1) according to claim 16, further including at least one external physical quantity measurement sensor.

18. A system for geolocating goods or services including at least one tracker (1) according to claim 16 or 17 and a resolution server adapted to implement a method according to claim 14 or according to claim 15.
